(19) Europäisches Patentamt
European Patent Office
Office européen des brevets

(11) **EP 4 786 061 A1**

(12) **EUROPEAN PATENT APPLICATION**
published in accordance with Art. 153(4) EPC

(43) Date of publication:
**05.08.2026 Bulletin 2026/32**

(21) Application number: **24872106.0**

(22) Date of filing: **20.09.2024**

(51) International Patent Classification (IPC):
***B06B 1/04*** (2006.01)

(52) Cooperative Patent Classification (CPC):
**B06B 1/04**

(86) International application number:
**PCT/JP2024/033738**

(87) International publication number:
**WO 2025/070315 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 JP 2023170106**

(71) Applicant: **Minebea Mitsumi Inc.**
**Kitasaku-gun, Nagano 3890293 (JP)**

(72) Inventors:
• **KINOSHITA, Yosuke**
**Tokyo 206-8567 (JP)**
• **SATO, Soichi**
**Tokyo 206-8567 (JP)**

(74) Representative: **Tiburzi, Andrea et al**
**Barzanò & Zanardo Roma S.p.A.**
**Via Piemonte 26**
**00187 Roma (IT)**

(54) **VIBRATION ACTUATOR AND VIBRATION PRESENTATION DEVICE**

(57) This vibration actuator comprises: a plate-shaped magnetic body; a plate-shaped electromagnet which is disposed so as to face the plate-shaped magnetic body and in which a coil is disposed at the center of a core; an elastic body that is a frame-shaped elastic body surrounding the plate-shaped magnetic body, supports the plate-shaped electromagnet on both sides of the coil, and is connected to the plate-shaped magnetic body; and a housing cover that covers the elastic body in the vibration direction and accommodates the elastic body together with the electromagnet. One among the electromagnet and the plate-shaped magnetic body is displaced by the magnetic force generated by the energization of the coil so as to approach the other inside the cover, and vibrates.

FIG. 10

EP 4 786 061 A1

## Description

Technical Field

The present invention relates to a vibration actuator and a vibration presentation apparatus including the vibration actuator.

Background Art

In the related art, a configuration is known in which vibration is imparted, by a vibration actuator, as a tactile operational sensation (a sensation of operating by touch) to a finger pad or the like of an operator who touches a display screen displayed on a touch panel that is a sensing panel (see Patent Literature (hereinafter, referred to as "PTL") 1).

PTL 1 discloses a vibration presentation apparatus that applies a vibration in response to an operation on a touch panel. In the vibration presentation apparatus, a voice coil motor that generates a vibration and a supporting part that is compressed with a predetermined force are disposed between a vibration panel that is a vibration section for presenting the vibration and a housing that supports the vibration panel. In addition, a damper that applies a braking action to the vibration of the vibration section and a spring that applies a compression force to the supporting part and the damper are interposed in parallel between the vibration panel and the housing.

Citation List

Patent Literature

PTL 1
Japanese Patent Application Laid-Open No. 2016-163854

Summary of Invention

Technical Problem

In recent years, in a structure that applies a tactile operational sensation to a finger pad or the like of an operator who touches the touch panel as described above, it has been desired to express a vibration that is a tactile operational sensation according to applications or use cases of an operation device in addition to miniaturization. As a tactile feedback that is the tactile operational sensation, it is desired to stably generate a strong feedback while thinning the apparatus itself.

However, in PTL 1, the spring (coil spring) disposed such that the extension direction is the vertical direction, and, the damper and the supporting part disposed in parallel to the spring are disposed between the vibration panel and the housing, so that it is difficult to achieve the miniaturization and the thinning.

In addition, in the vibration presentation apparatus of PTL 1, the spring is disposed at a corner portion between the rectangular vibration panel and the rectangular housing, and is disposed in a state of being exposed to the outside. In a structure in which the spring supporting a movable part movably is disposed in a state of being exposed to the outside, the spring may be deformed by an external impact such as a collision with an external member or a fall of the apparatus during an assembly work or an attachment work to a product, and the stable driving may be unstable.

Objectives of the present invention include providing a vibration actuator and a vibration presentation apparatus that can be made low and that stably vibrate by preventing deformation of an elastic body.

Solution to Problem

A vibration actuator according to the present invention is configured to include:

a plate-shaped magnetic body;
a plate-shaped electromagnet disposed to face the plate-shaped magnetic body and including a core and a coil disposed on a central portion of the core;
an elastic body that is a frame-shaped elastic body surrounding the plate-shaped magnetic body, that supports the plate-shaped electromagnet at both sides of the coil, and that is connected to the plate-shaped magnetic body; and
a housing cover that covers the elastic body in a vibration direction and that accommodates the plate-shaped electromagnet together with the elastic body, in which
one of the plate-shaped electromagnet or the plate-shaped magnetic body is displaced to approach the other in the housing cover to vibrate by a magnetic force generated by energizing the coil.

A vibration presentation apparatus according to the present invention is a vibration presentation apparatus in which the vibration actuator described above is disposed on a back surface of an operation surface, in which the coil is energized in response to a touch operation of a user on the operation surface, and one of the plate-shaped electromagnet or the plate-shaped magnetic body is displaced to approach the other to present vibration.

Advantageous Effects of Invention

According to the present invention, it is possible to achieve a low profile and to stably vibrate by preventing deformation of an elastic body.

Brief Description of Drawings

FIG. 1 is an external perspective view of a vibration actuator according to Embodiment 1 of the present invention;

FIG. 2 is an exploded perspective view of the vibration actuator with a housing cover removed;

FIG. 3 is a plan view of an actuator body;

FIG. 4 is a bottom view of the actuator body;

FIG. 5 is an exploded perspective view of the actuator body of the vibration actuator;

FIG. 6 is an exploded perspective view of a core body in the actuator body;

FIG. 7 is a sectional view taken along line A-A of FIG. 1;

FIG. 8 is a sectional view taken along line B-B of FIG. 1;

FIG. 9 is a partially enlarged view of FIG. 8;

FIG. 10 is a diagram for describing a magnetic circuit of the vibration actuator;

FIG. 11 is a diagram showing a circuit configuration of a control section of the vibration actuator;

FIG. 12 is an exploded perspective view of a vibration actuator according to Embodiment 2 of the present invention, with a housing cover removed;

FIG. 13 is a plan view of the vibration actuator;

FIG. 14 is a bottom view of the vibration actuator;

FIG. 15 is an exploded perspective view of the actuator body of the vibration actuator;

FIG. 16 is an exploded perspective view of the core body in the actuator body;

FIG. 17 is a sectional view taken along line C-C of FIG. 13;

FIG. 18 is a sectional view taken along line D-D of FIG. 13;

FIG. 19 is an exploded perspective view of a housing cover of a vibration actuator according to Embodiment 3 of the present invention;

FIG. 20 is a plan view of the vibration actuator;

FIG. 21 is a bottom view of the vibration actuator;

FIG. 22 is an exploded perspective view of the actuator body;

FIG. 23 is a sectional view taken along line C-C of FIG. 20;

FIG. 24 is a sectional view taken along line D-D of FIG. 20; and

FIG. 25 is a diagram showing an example of a vibration presentation apparatus including the vibration actuator.

Description of Embodiments

Hereinafter, embodiments of the present invention will be described in detail with reference to the drawings.
In the present embodiment, the description will be made using an orthogonal coordinate system (X, Y, Z). The same orthogonal coordinate system (X, Y, Z) is also used for illustration of below-mentioned figures. Hereinafter, vibration actuator 1 will be described with the width, the depth, and the height thereof as lengths in the X direction, the Y direction, and the Z direction, respectively. In each component constituting vibration actuator 1, for convenience, a surface on a "planar side" (or an "upper side") will be described as a "front surface" (or an "upper surface"), and a surface on a "rear side" (or a "lower side") will be described as a "back surface" (or a "lower surface").

(Embodiment 1)

<Overall Configuration of Vibration Actuator 1>

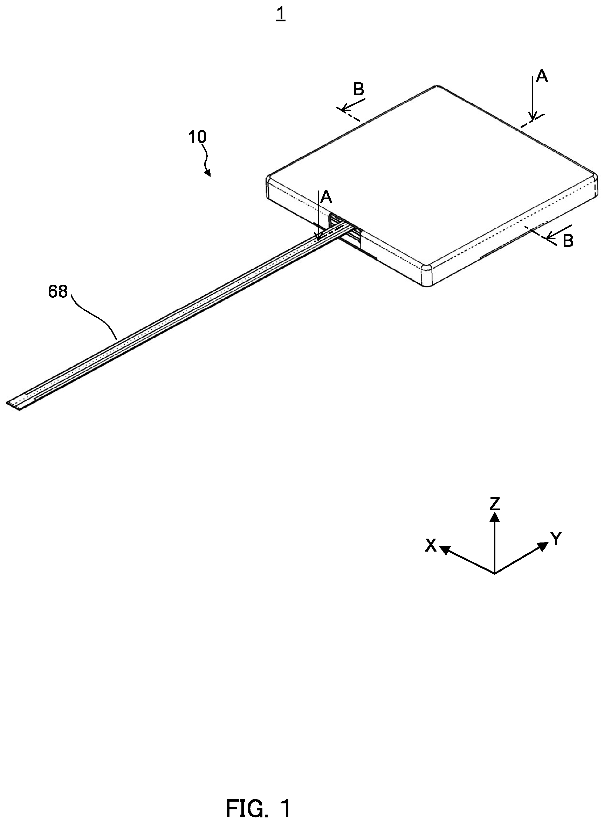

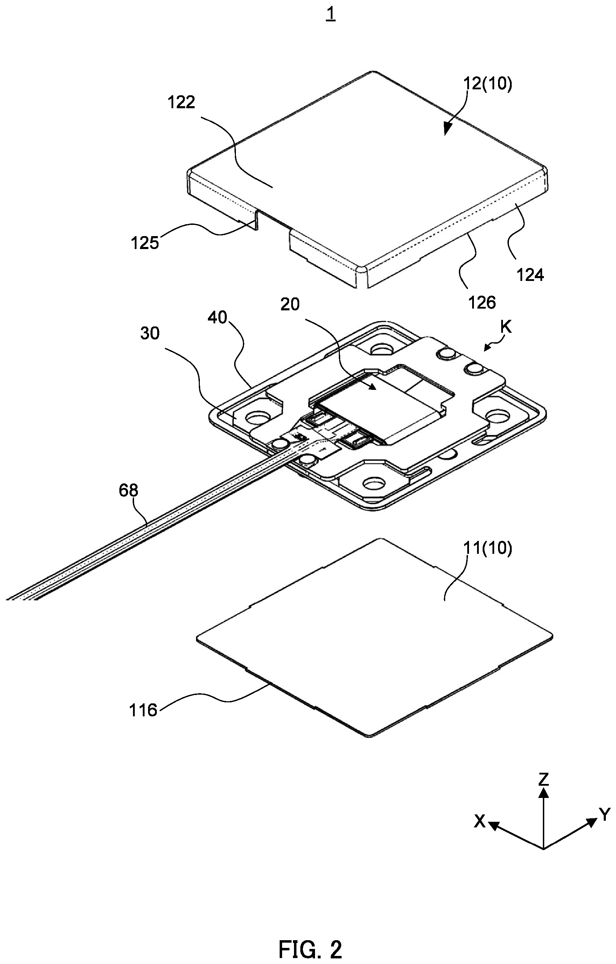

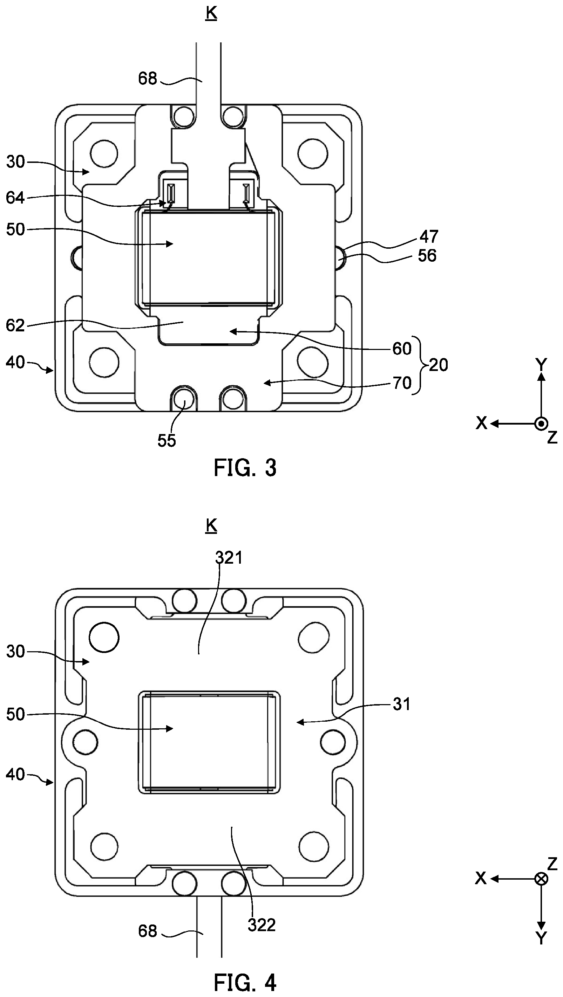

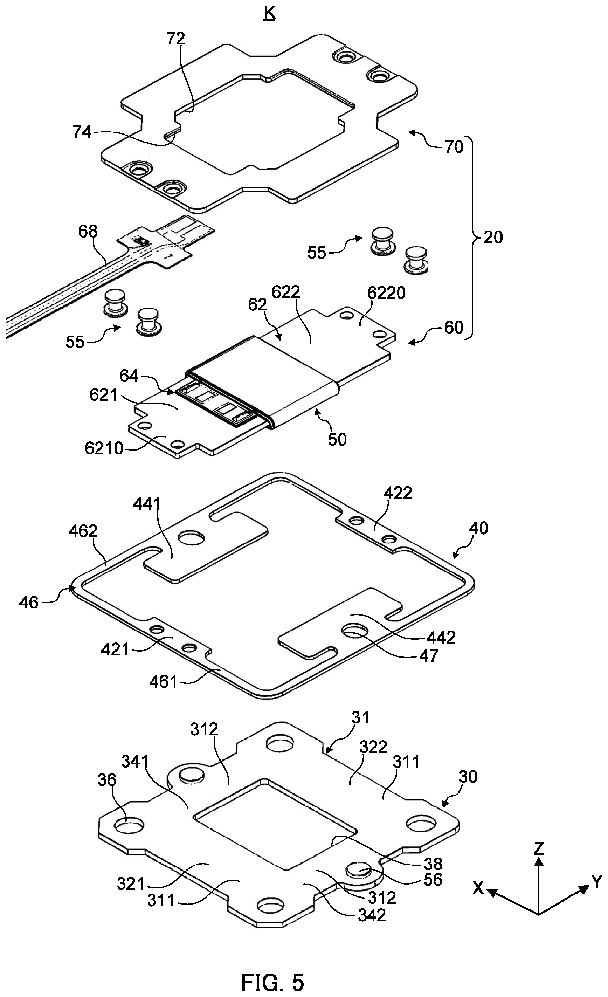

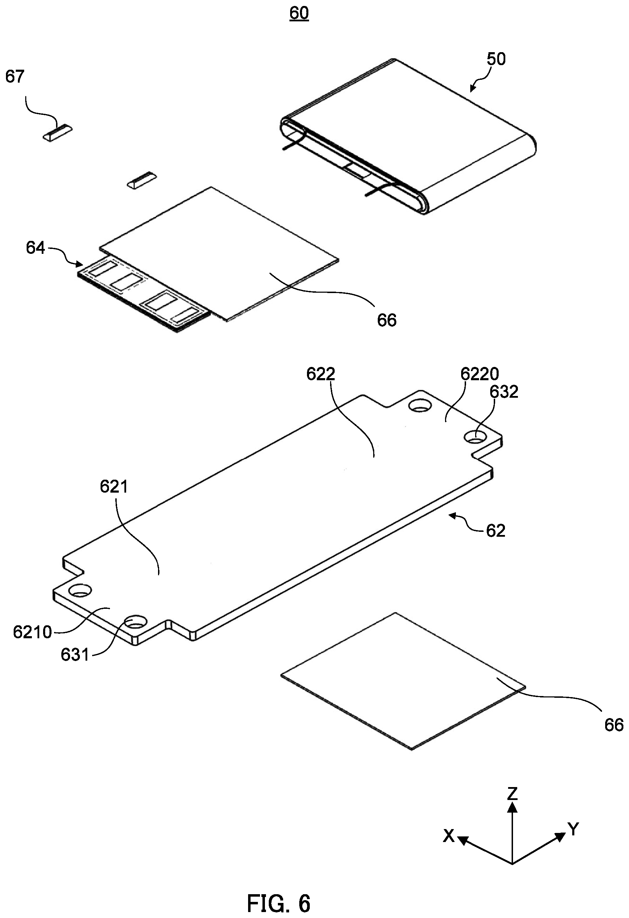

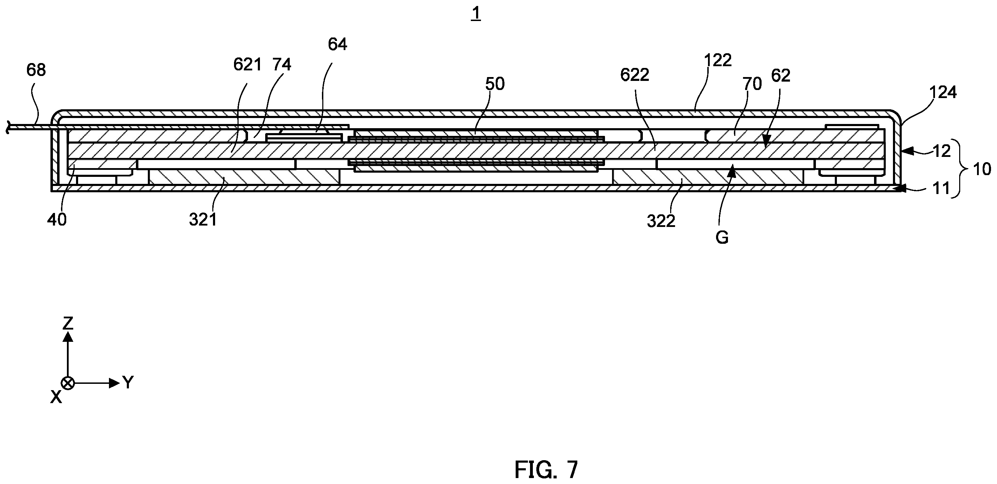

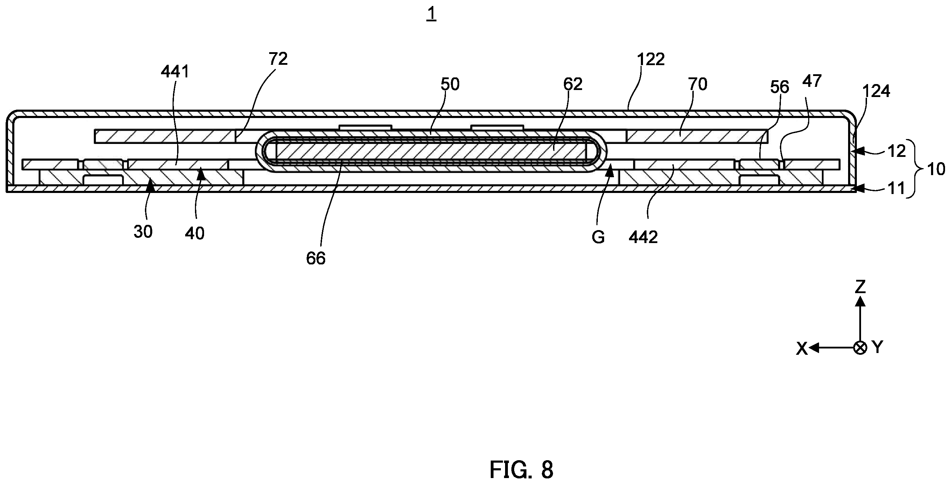

FIG. 1 is an external perspective view of a vibration actuator according to Embodiment 1 of the present invention, and FIG. 2 is an exploded perspective view of the vibration actuator with a housing cover removed. In addition, FIG. 3 is a plan view of the actuator body, and FIG. 4 is a bottom view of the actuator body. Further, FIG. 5 is an exploded perspective view of the actuator body of the vibration actuator, and FIG. 6 is an exploded perspective view of a core body in the actuator body. In addition, FIG. 7 is a sectional view taken along line A-A of FIG. 1, and FIG. 8 is a sectional view taken along line B-B of FIG. 1.
Vibration actuator 1 is a vibration body including housing 10 formed in a thin flat plate shape. Since vibration actuator 1 has an outer surface surrounded by orthogonal planes, vibration actuator 1 can be attached to a vibration target with surface contact on any surface of the outer surface, and can be reliably and easily attached to the vibration target as long as the front and back surfaces are a surface having a large area. As a result, the vibration can be suitably applied to the vibration target.
For example, vibration actuator 1 may be mounted on an electronic apparatus such as a portable game terminal device or a portable device such as a smartphone. Vibration actuator 1 is mounted on each device such as a portable device and vibrates by being driven to notify a user of an incoming call or to provide an operational feel or a sense of presence. In addition, vibration actuator 1 may be used in a vibration presentation apparatus (for example, a track pad) that is a contact-type input apparatus as a vibration presentation section (operation surface) that is subjected to a touch operation by an operator. In this case, for example, vibration actuator 1 can be attached to the operation device and vibrate the operation device to apply a tactile operational sensation (also referred to as a "tactile sensation" or a "sense of force") to the operator who operates the operation device by touching the operation device according to the application or the usage status of the operation device.
Vibration actuator 1 may be referred to as a flat plate or a thin plate. Vibration actuator 1 includes housing 10 formed in a thin flat plate shape and actuator body K formed in a thin plate shape to generate a vibration in housing 10. Housing 10 mainly accommodates a movable part and an elastic body of actuator body K and surrounds and covers the movable part and the elastic body. Housing 10 of vibration actuator 1 accommodates actuator body K. In vibration actuator 1, movable part 20 (see FIG. 5) of actuator body K in housing 10 is configured to vibrate in a thickness direction in a case where the Z direction is a thickness direction of the plate (plate thickness).
First, actuator body K as a vibration generation section that generates a vibration in vibration actuator 1 will be described, and details of housing 10 will be described later.

<Actuator Body K>

Actuator body K shown in FIGS. 2 to 8 includes movable part 20, base part (hereinafter, also referred to as a "base plate") 30, and plate-shaped elastic part 40 as an elastic supporting part (elastic body) that supports movable part 20 movably with respect to base part 30.
In actuator body K, movable part 20 performs an approach and separation operation in the Z direction, which is the plate thickness direction, with respect to base part 30, specifically, toward the base part 30 side to vibrate, and the vibration is applied to a user who operates the operation device to which vibration actuator 1 itself is attached as an operational feel via housing 10.

In actuator body K, all of movable part 20, base part 30, and plate-shaped elastic part (elastic supporting part) 40 are configured in a flat plate shape, and configured to minimize a space occupied in the thickness direction, which is the vibration direction, within a movable range of movable part 20. In actuator body K, base part 30 of movable part 20 and base part 30 is fixed to housing base 11 of housing 10.

<Movable Part 20>

As shown in FIGS. 3 to 5, movable part 20 includes core body 60 including coil 50 and plate-shaped weight section 70 as a weight section. Movable part 20 may be configured to include core body 60, but without including plate-shaped weight section 70.

<Core Body (Electromagnet) 60>

As shown in FIGS. 3, 5, and 6, core body 60 includes coil 50, core 62 to which coil 50 is externally fitted, and board 64 connected to coil 50. Core body 60 constitutes an electromagnet including coil 50 and core 62, and power is supplied to coil 50 via board 64.

Coil 50 is disposed to surround the central portion of core 62 having a flat rectangular plate shape at an outer periphery of the central portion via insulating film portion 66. Coil 50 is disposed so as to be unlikely to directly contact core 62 via insulating film portion 66.

Core (magnetic core) 62 is a rectangular plate-shaped magnetic body and is formed in a band shape that is long in a winding axis direction of coil 50 disposed at the central portion. Core 62 has both end portions 621 and 622 that protrude from coil 50 in the winding axis direction of coil 50.

Core 62 constitutes a rectangular plate-shaped core body with the central portion on which coil 50 is disposed and both end portions 621 and 622.

Core 62 is excited and magnetized by energization of coil 50. Both end portions 621 and 622 serve as magnetic poles and generate a magnetic attractive force between the magnetic poles and the nearby magnetic body, that is, base part 30 (in detail, the facing portion of base part 30).

Specifically, in core 62, both end portions 621 and 622, particularly, the back surfaces of both end portions 621 and 622, serve as planar magnetic pole surfaces by energizing coil 50. Core 62 is preferably formed of, for example, a soft magnetic material such as a silicon steel plate, a permalloy, or a ferrite. In addition, core 62 may be composed of electromagnetic stainless steel, a sintered material, a Metal Injection Molded (MIM) material, a laminated steel sheet, an electro-galvanized steel sheet (SECC), or the like.

Core 62 both end pieces 6210 and 6220 further extending respectively from both end portions 621 and 622 sandwiching coil 50 in the longitudinal direction, which is the winding axis direction of coil 50, and constituting both ends of core 62. Both end pieces 6210 and 6220 are plate-shaped bodies having a width narrower than the core body. Spring connecting portions 631 and 632 are provided on both end pieces 6210 and 6220, and spring connecting portions 631 and 632 have hole portions for bonding to plate-shaped elastic parts 40, respectively.

Board 64 is disposed on core 62 and is attached to core 62 in a state of being insulated from core 62 by being attached to core 62 via an adhesive, a double-sided tape, or the like. Board 64 connects coil 50 and an external device via an interconnection section. The interconnection section includes a coil-interconnection land portion connected to a coil wire of an end portion of coil 50 via a fillet and an external-connection land portion connected to the external device.

Board 64 is, for example, a flexible printed circuit and may be composed of a plurality of layers. For example, the insulating layer is composed of a flexible material having insulating properties, such as polyimide, and the coil-interconnection land portion, the external-connection land portion, and the like are provided on a surface of the insulating layer.

<Plate-Shaped Weight Section 70>

Plate-shaped weight section 70 shown in FIGS. 3 to 5 functions as a weight that promotes the vibration and is provided corresponding to a shape of core 62, for example, a lateral width (length in the X direction) and a depth direction length (length in the Y direction).

Plate-shaped weight section 70 is a frame-shaped member having an opening (opening portion 72) in a region of coil 50 and has opening portion 74 continuous to opening portion 72 in a region of board 64. Plate-shaped weight section 70 is fixed to core 62 at portions sandwiching coil 50 on an upper surface of core 62. Plate-shaped weight section 70 is fixed to plate-shaped elastic part 40 in such a manner as to be suspended core 62, for example, at spring connecting portions 631 and 632 of core 62 via fastening members 55.

Since plate-shaped weight section 70 is fixed to core body 60 (specifically, core 62) in a state where the thicknesses of coil 50 and board 64 are relieved through opening portions 72 and 74, the vibration can be adjusted while achieving a low profile in actuator body K.

In addition, a weight of plate-shaped weight section 70 can be optionally set, and can be adjusted, for example, by adjusting a length of plate-shaped weight section 70 in the Y direction, adjusting a length in the Z direction, adjusting a material, or the like. As described above, the weight of movable part 20 can be adjusted by plate-shaped weight section 70, and the natural frequency can be set by the adjustment. In a case where a disposition space in the thickness (Z direction) is limited, the shape may be a shape in which the weight is increased in the XY direction.

<Base Part 30>

As shown in FIGS. 2 to 5, 7, and 8, base part 30 supports movable part 20 that is driven as an electromagnet such that the movable part is movable in the approach and separation direction of base part 30, that is, the Z direction in FIG. 1, via plate-shaped elastic part 40. Base part 30 is a magnetic body and has facing portions 321 and 322 that are magnetic bodies facing both end portions 621 and 622 of core 62 with a gap (space) G in a facing direction intersecting the winding axis direction of coil 50. Base part 30 is a flat plate having a predetermined thickness in the Z direction, is disposed to sandwich plate-shaped elastic part 40 together with core body 60 in the thickness direction, and forms a bottom surface of actuator body K. Base part 30 may be referred to as a base plate.

Base part 30 includes plate-shaped base body portion 31 that is a magnetic body, and base body portion 31 includes facing portions (magnetic bodies) 321 and 322 that are magnetic bodies facing both end portions 621 and 622 of core 62. Base body portion 31 is provided with spring connecting portions 341 and 342 and fixing portions 36. Base body portion 31 is a magnetic body and is preferably formed of, for example, iron (Fe), cobalt (Co), nickel (Ni), or gadolinium (Gd).

Base body portion 31 has opening portion 38 at a center and is formed in a square frame shape in plan view with a pair of side portions 311 and a pair of side portions 312 adjacent to side portions 311. Opening portion 38 is a space into which a lower portion of coil 50 is inserted, and is formed in a shape corresponding to an outer shape of coil 50, for example, a square shape.

In base body portion 31, facing portions 321 and 322 that are magnetic bodies are provided respectively on the pair of side portions (X side portions) 311 that face each other and are spaced from each other, and spring connecting portions 341 and 342 are provided respectively on the pair of side portions (Y side portions) 312 adjacent to the pair of side portions 311.

The pair of side portions 311 and the other pair of side portions 312 are a planar body, and notches for securing a deformation region of a part of plate-shaped elastic part 40 are formed at central portions of four outer edge portions constituting the outer peripheral portion of base body portion 31.

Facing portions (facing surfaces) 321 and 322 are portions of base part 30 and are portions of base body portion 31 that face both end portions 621 and 622 of core 62 with a gap (space) G therebetween in a facing direction intersecting the winding axis direction of coil 50, for example, the Z direction.

Facing portions 321 and 322 are attracted to both end portions 621 and 622 by a magnetic attractive force generated between the back surfaces of both end portions 621 and 622 of core 62 by energizing coil 50. That is, facing portions 321 and 322 pull both end portions 621 and 622 in the facing direction (Z direction).

Facing portions 321 and 322 are formed at central portions of pair of side portions 311 that sandwich opening portion 38 in the Y direction in base body portion 31.

Since facing portions 321 and 322 are surfaces that face the back surfaces of both end portions 621 and 622 entirely, magnetic flux can efficiently flow between the facing portions and the back surfaces of both end portions 621 and 622.

Facing portions 321 and 322 are formed of a metal material (for example, iron), for example, together with spring connecting portions 341 and 342 and fixing portions 36 as base body portion 31.

Spring connecting portions 341 and 342 are disposed to sandwich opening portion 38 in the X direction, and are joined to base-part-side fixing portions 441 and 442 of plate-shaped elastic part 40 on the front surface side of base part 30.

Each of fixing portion 36 fixes base part 30 to housing base 11 of housing 10. Fixing portion 36 is, for example, a fastening hole and is fastened to housing base 11 using a fastening member such as an adhesive or a rivet or using welding or the like. Fixing portion 36 is formed at four corners of base part 30 and can reliably fix base part 30 to housing base 11.

<Plate-Shaped Elastic Part 40>

Specifically, plate-shaped elastic part 40 is an elastic leaf spring, and supports movable part 20 such that the movable part is movable with respect to base part 30 in the thickness direction (Z direction). Plate-shaped elastic part 40 is formed in a thin plate frame shape having a predetermined thickness (thickness in the Z direction), and is disposed in a layered manner between base part 30 and movable part 20 in the thickness direction (Z direction).

Plate-shaped elastic part 40 is connected to each of movable part 20 (specifically, core body 60) and base part 30 and is bonded in a state where the plate-shaped movable part 20 (core body 60) and the plate-shaped base part 30 are separated by a thickness of the plate-shaped elastic part, that is, in a state where the gap G (see FIGS. 7 and 8) is provided.

Plate-shaped elastic part 40 is a frame-shaped body that surrounds base part 30 in plan view, is disposed on an outer peripheral side of base part 30, and has frame-shaped elastic body portion 46 that is deformable in the Z direction. Elastic body portion 46 is provided with movable-part-side fixing portions 421 and 422 and base-part-side fixing portions 441 and 442.

Elastic body portion 46 includes a pair of side portions 461 that are parallel to each other and another pair of side portions 462 that are adjacent to pair of side portions 461 and face each other.

Movable-part-side fixing portions 421 and 422 that protrude inward are provided at central portions of the pair of side portions 461, and the pair of side portions 461 are bonded to spring connecting portions 631 and 632 of movable part 20 via movable-part-side fixing portions 421 and 422. As a result, plate-shaped elastic part 40 is in a state of suspending core body 60 that is the electromagnet by pair of side portions 461. On the other hand, base-part-side fixing portions 441 and 442 that protrude inward are provided at the other pair of side portions 462, and plate-shaped elastic part 40 is connected to spring connecting portions 341 and 342 of base part 30 via base-part-side fixing portions 441 and 442.

In plate-shaped elastic part 40, elastic body portion 46 is disposed on the same plane as movable-part-side fixing portions 421 and 422 and base-part-side fixing portions 441 and 442.

Plate-shaped elastic part 40 is in a state of supporting movable part 20 (specifically, core body 60) in a balanced and symmetrical manner in directions (X direction and Y direction) perpendicular to a direction (vibration direction) facing base part 30 with respect to base part 30.

Base-part-side fixing portions 441 and 442 and spring connecting portions 341 and 342 may be fixed by using a fastening member such as a screw, a bolt, or the like, an adhesive, or the like, but may be joined and fixed to each other via recessed portions and protruding portions that are provided on both and shaped to be capable of being fitted to each other. For example, spring connecting portions 341 and 342 are provided with protruding boss portions (protruding portions) 56 that protrude to base-part-side fixing portions 441 and 442 side, and base-part-side fixing portions 441 and 442 are provided with joining holes 47 at positions corresponding to boss portions 56. Joining holes 47 may be long hole in part of which boss portions 56 are internally fitted. Joining holes 47 in which boss portions 56 are disposed inside function as positioning of base-part-side fixing portions 441 and 442 with respect to base part 30, and fixes boss portions 56 to be press-fitted.

When boss portions 56 are fixed to joining holes 47 by press-fitting, fixation is performed by using an adhesive or laser welding between both. A groove portion that functions as an adhesive reservoir in a case of using an adhesive may be formed around a root portion of boss portion 56. The groove portion may also have a function of serving as a place for escaping chips and dust generated in a case of press-fitting boss portion 56 into bonding hole 47.

Since plate-shaped elastic part 40 is a rectangular frame body (here, a thin plate frame-shaped body), the number of parts can be reduced and the entire body can be thinned, and plate-shaped elastic part 40 can be manufactured without bending processing or the like of the parts. Further, plate-shaped elastic part 40 is a frame body, and can thus be disposed in the frame body to be disposed without interfering with the other parts.

In addition, as will be described below, plate-shaped elastic part 40 can determine the amount of displacement and the natural frequency of movable part 20 by setting a spring constant $K_{sp}$, and generates a mechanical tactile sensation by causing the displacement in a case of driving movable part 20, that is, in a case of energizing coil 50.

Plate-shaped elastic part 40 is deformed between the upper surface of core 62 or coil 50 and the bottom surface of base part 30. As described above, plate-shaped elastic part 40 is formed in a rectangular frame shape, and movable-part-side fixing portions 421 and 422 and base-part-side fixing portions 441 and 442 are disposed at central portions of the respective side portions constituting the rectangular frame. In a case of driving core body 60, movable-part-side fixing portions 421 and 422 are displaced with respect to base-part-side fixing portions 441 and 442.

Core body 60 is supported on both sides by the L-shaped arms that connect movable-part-side fixing portions 421 and 422 to base-part-side fixing portions 441 and 442 in elastic body portion 46. Therefore, it is possible to disperse the stress in a case of elastic deformation, and it is possible to move core body 60 in the vibration direction (Z direction) without inclining core body 60 with respect to base part 30, and it is possible to improve the reliability of the vibration state and improve the stability.

<Housing 10>

Housing 10 covers the vibration generation section in actuator body K and accommodates, for example, actuator body K.

Housing 10 includes housing base 11 that constitutes a bottom portion and cover 12 that constitutes a hollow thin housing together with housing base 11.

Housing cover 12 is provided with interconnection lead-out hole 125, and interconnection board 68 connected to actuator body K is led out. In addition, by engaging engagement edge portions 116 of housing base 11 with notches 126, a substantially sealed hollow portion in which only interconnection lead-out hole 125 is opened is configured. For example, housing 10 may be formed of a metal plate such as SUS, and when housing 10 is formed of the metal plate, the plate thickness can be made thin.

Housing cover 12 accommodates top surface portion 122, peripheral wall portion 124 that hangs from a periphery of top surface portion 122, the base part (plate-shaped magnetic body) 30, plate-shaped elastic part 40, and movable part 20.

Housing cover 12 accommodates movable part 20 and plate-shaped elastic part 40 in a movable state.

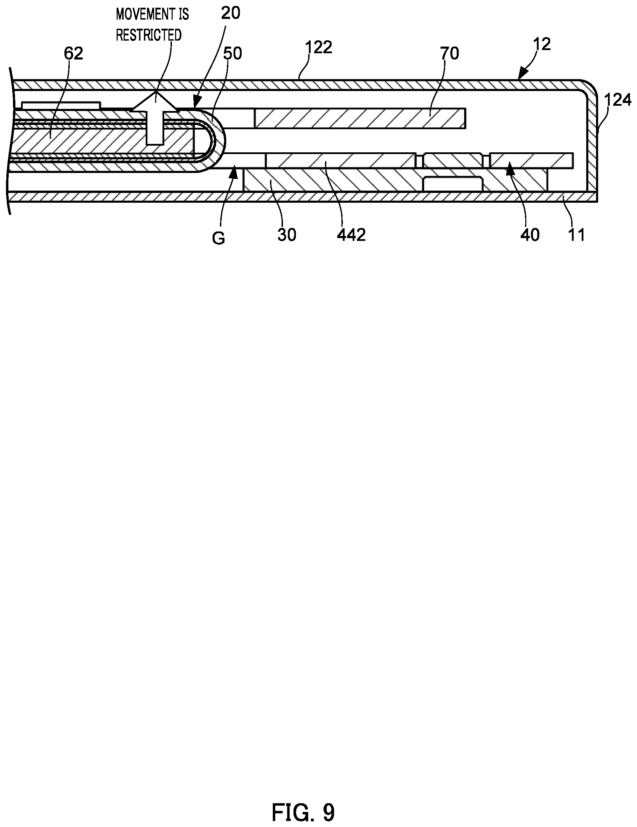

FIG. 9 is a partially enlarged view of FIG. 8. Top surface portion 122 is disposed to face movable part 20 (here, plate-shaped weight section 70) with a gap that is an operating space of movable part 20.

For example, top surface portion 122 has a function (hard stop function) of restricting the movement of movable part 20 such that movable part 20 does not excessively move in a direction of separating from base part 30, which is a bottom surface portion, in a case where movable part 20 is subjected to an impact or the like from the outside (see FIG. 9). That is, in housing cover 12, top surface portion 122 is disposed outside a movement range of movable part 20 in a normal operation in which movable part 20 approaches base part (plate-shaped magnetic body) 30 and inside a maximum movement range of movable part 20 due to the impact, as a movement restriction surface portion for movable part 20.

As a result, the reliability of the movable part of vibration actuator 1 itself can be ensured. The excessive movement of movable part 20 toward the base part 30 side is restricted by core 62 of movable part 20 abutting on base part 30.

As described above, since actuator body K is covered with housing 10, the rigidity of vibration actuator 1 itself can be ensured. Further, since movable part 20 and plate-shaped elastic part 40 are not exposed and are completely covered by housing 10, the characteristics during the movement are stable, and stable vibration can be generated. In addition, during the operation, handling, or the like, the load is not applied.

<Magnetic Circuit of Vibration Actuator 1>

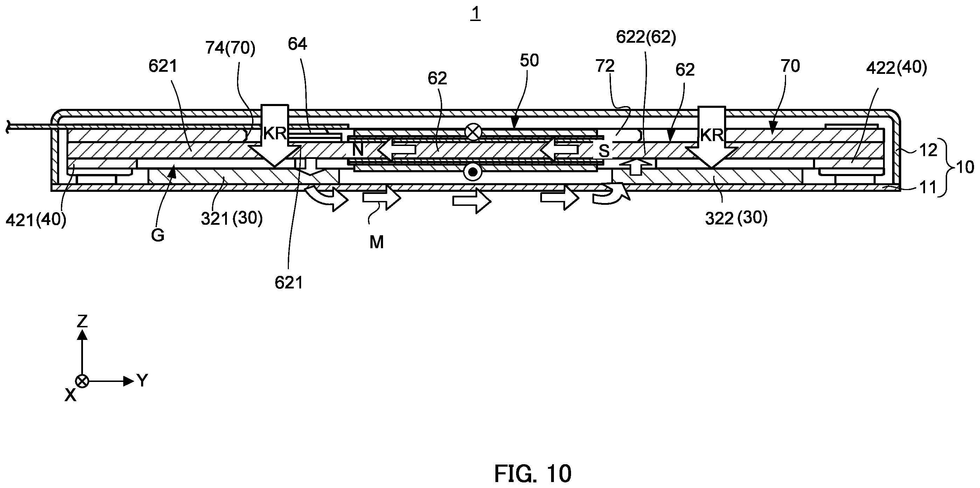

FIG. 10 is a diagram for describing a drive circuit of the vibration actuator. FIG. 10 is a sectional view of the vibration actuator shown in FIG. 7.

In a case where a current flows through coil 50 of actuator body K shown in FIG. 10, core 62 is excited to generate a magnetic field, and both end portions 621 and 622 of core 62 serve as magnetic poles. For example, in a case where one end portion 621 of core 62 is a N pole and other end portion 622 is an S pole, a magnetic circuit indicated by the magnetic flux flow M is formed between core 62 and facing portions 321 and 322 of base part 30.

The magnetic flux flow M in the magnetic circuit flows from one end portion 621 to facing portion 321 facing one end portion 621, reaches facing portion 322 from facing portion 321, flows from facing portion 322 to other end portion 622 of core 62, and is emitted again from one end portion 621 through core 62.

As a result, by the principle of the electromagnetic solenoid, both end portions 621 and 622 of core 62 generate a magnetic attractive force KR. That is, in the electromagnet, the magnetic attractive force KR is generated in a direction orthogonal to the winding axis of coil 50, and both end portions 621 and 622 are attracted to both of facing portions 321 and 322 of base part 30.

Since base part 30 is fixed to a housing or the like via fixing portions 36, both end portions 621 and 622 are attracted to and adhere to facing portions 321 and 322. That is, plate-shaped elastic part 40 is deformed, and movable part 20 is attracted to the base part 30 side. Movable part 20 approaches the position side (in the -Z direction) where base part 30 is fixed.

Next, in a case where the energization of coil 50 is released, the magnetic field disappears, the magnetic attractive force KR of movable part 20 disappears, and the biasing force of plate-shaped elastic part 40 deformed to the base part 30 side is released. That is, a reaction force (force in the -KR direction) of the spring as plate-shaped elastic part 40 is generated. As a result, movable part 20 is moved by the reaction force (-KR) of plate-shaped elastic part 40 to move to the original position (position in the non-driven stationary state as a reference position as shown in FIG. 7) (i.e., move in the positive Z direction opposite to the attraction direction of the magnetic attractive force KR). In this case, movable part 20 is moved to a position displaced in a direction away from base part 30 from the stationary position, which is the stationary state, by the reaction force (-KR), and generates a strong vibration.

This vibration is repeatedly freely vibrated while being damped with the damping of the biasing force. In addition, movable part 20 may be moved back and forth in the Z direction to generate the vibration by repeating the energization and the release of coil 50. As described above, in actuator body K, movable part 20 is supported in a state of being suspended by plate-shaped elastic part 40 with respect to base part 30. When movable part 20 is energized, movable part 20 functions as an electromagnet, is mechanically displaced by the magnetic attractive force generated between movable part 20 and facing portions 321 and 322 that are magnetic bodies, and then freely vibrates.

As described above, in actuator body K, movable part 20 is moved to the base part 30 side by the magnetic attractive force generated between core 62 and the facing portions (magnetic bodies) 321 and 322 in a case where coil 50 is energized. The movement of movable part 20 causes movable part 20 to vibrate by the elastic force (biasing force) generated in plate-shaped elastic part 40 to impart a tactile sensation to the user.

In actuator body K, plate-shaped coil 50 is wound around thin plate-shaped core 62. In addition, core 62 is supported to be movable in the Z direction with respect to base part 30 by plate-shaped elastic part 40 in a state where coil 50 is inserted into opening portion 38 of thin plate-shaped base part 30.

Actuator body K can be configured to have only a height of thin plate-shaped core 62, plate-shaped weight section 70 or coil 50, plate-shaped elastic part 40, and base part 30 stacked on one another. A case where plate-shaped weight section 70 is included in the stacked elements constituting the height in actuator body K is a case where the upper surface of the portion of coil 50 on core 62 is lower than the upper surface of plate-shaped weight section 70.

Actuator body K is configured to be thin and plate-shaped and vibrates without including a magnet, and is reduced in thickness, so that it is possible to achieve space saving of the disposition space. That is, the configuration of vibration actuator 1 including actuator body K has a configuration that is further thinned than a configuration in which members that generate magnetism and drive the movable part in the Z direction are provided to be superimposed in the Z direction, such as disposing the coil and the magnet to face each other in the Z direction. Vibration actuator 1 can be thinned and miniaturized, and can impart a suitable tactile sensation corresponding to the pressing operation of the user on the vibration presentation section.

<Driving Principle of Vibration Actuator 1 (Actuator Body K)>

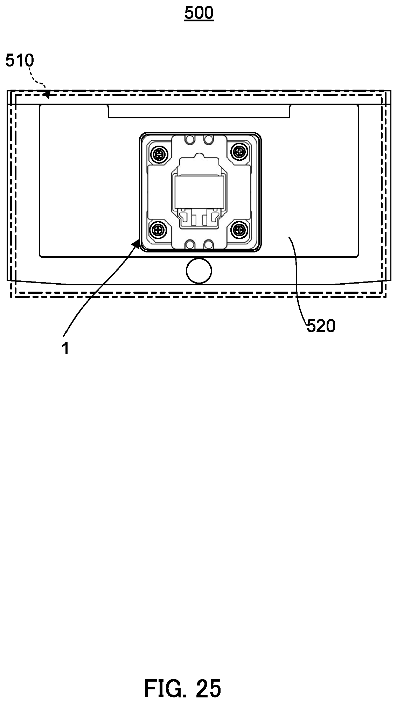

Hereinafter, the driving principle of vibration actuator 1 will be briefly described. Vibration actuator 1 can also be driven by using a pulse to generate a resonance phenomenon by using the following motion equation and circuit equation. As the operation, for example, vibration actuator 1 may not be resonance-driven and may express an operational feel as a track pad as vibration presentation apparatus 500 shown in FIG. 25, for example, and may be driven by inputting a current pulse (singular or plural) via a control section (not shown).

Movable part 20 in actuator body K performs a reciprocating motion based on Expressions (1) and (2).

[1]

$$m \frac{d^2 x(t)}{dt^2} = K_f i(t) - K_{sp} x(t) - D \frac{dx(t)}{dt} \quad \text{... (Expression 1)}$$

m: mass [kg]
x(t): displacement [m]
$K_f$: thrust constant [N/A]
i(t): current [A]
$K_{sp}$: spring constant [N/m]
D: damping coefficient [N/(m/s)]

[2]

$$e(t) = R i(t) + L \frac{di(t)}{dt} + K_e \frac{dx(t)}{dt} \quad \text{... (Expression 2)}$$

e(t): voltage [V]
R: resistance [Ω]
L: inductance [H]
$K_e$: reverse electromotive force constant [V/(rad/s)]

That is, the mass m [Kg], the displacement x (t) [m], the thrust constant $K_f$ [N/A], the current i (t) [A], the spring constant $K_{sp}$ [N/m], the damping coefficient D [N/(m/s)], and the like in actuator body K can be appropriately changed within a range in which Expression (1) is satisfied. In addition, the voltage e (t) [V], the resistance R [Ω], the inductance L [H], and the reverse electromotive force constant $K_e$ [V/(rad/s)] can be appropriately changed within a range in which Expression (2) is satisfied.

As described above, the vibration in actuator body K is determined by the mass m of movable part 20 and the spring constant $K_{sp}$ of the metal spring (leaf spring in the present embodiment) as plate-shaped elastic part 40. In addition, the vibration generated by actuator body K can be set by the input voltage (pulse) and, if a vibration damping part is provided, the degree of damping of the vibration damping part.

<Drive Circuit of Vibration Actuator 1>

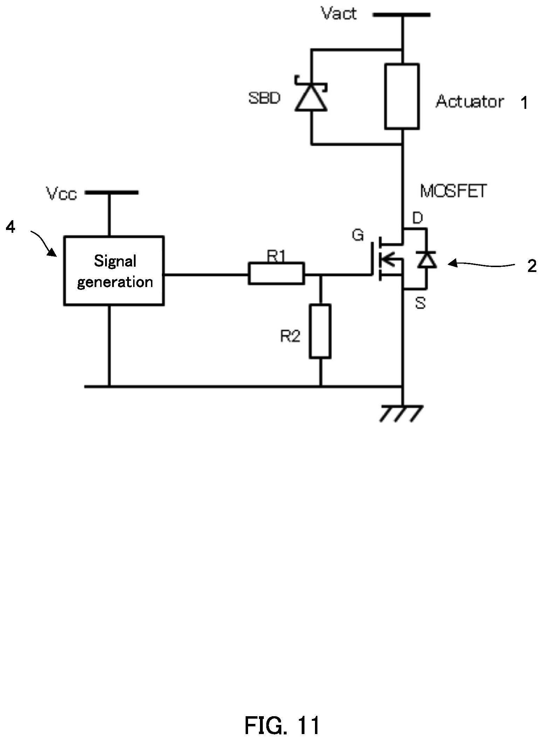

FIG. 11 is a diagram showing a circuit configuration of a control section of the vibration actuator according to Embodiment 1.

The drive circuit shown in FIG. 11 is included in the control section of vibration actuator 1. The drive circuit includes switching element 2 as a current pulse supply section configured by a Metal-Oxide-Semiconductor Field-Effect Transistor (MOSFET), signal generation section 4 as a voltage pulse application section, resistors R1 and R2, and Schottky Barrier Diodes (SBD). The drive circuit is an example of a specific configuration of an actuator driver.

Signal generation section 4 connected to the power supply voltage Vcc is connected to a gate of switching element 2. Switching element 2 is a discharge switching switch. Switching element 2 is connected to vibration actuator 1 (indicated by [Actuator] in FIG. 11), particularly signal generation section 4 of vibration actuator 1. A voltage is applied to vibration actuator 1 from power supply section Vact. Therefore, switching element 2 is turned on and off by the gate voltage control by signal generation section 4, and the current flows in a case where switching element 2 is turned on, and coil 50 that functions as a part of the vibration generation section is energized in vibration actuator 1.

The control section may include a calculation processing device configured by a Central Processing Unit (CPU) or the like that controls the entire vibration presentation device on which vibration actuator 1 is mounted, a main memory device configured by, for example, a Random Access Memory (RAM) that operates as a working area of the calculation processing device, and an auxiliary memory device configured by, for example, a non-volatile memory such as a flash memory or a hard disk that stores an operation program of the calculation processing device. The configuration including the calculation processing device, the main memory device, and the auxiliary memory device is, for example, an example of a specific configuration of a microcomputer. The calculation processing apparatus reads out various control programs and various data and the like associated with the program (hereinafter, collectively referred to as "programs and the like") from the auxiliary memory apparatus and stores the various control programs and the various data and the like in the main memory apparatus. In addition, the calculation processing apparatus executes the control program while using the data and the like to realize various functions of the vibration presentation apparatus. For example, the data may include various pulse waveform data for expressing various patterns such as a plurality of different vibration damping periods and a plurality of different vibration intensities. The various control programs may include a program for loading the pulse waveform data for generating an actuator drive signal that generates vibration corresponding to the input information in a case where information indicating the touch operation of the operator is input, and generates the actuator drive signal in accordance with the read pulse waveform data.

The auxiliary memory device may be a storage medium that is attachable to and detachable from the vibration presentation device. In addition, the control section may be configured to be communicable with the outside, and the programs and the like may be downloaded from the outside to the control section (main memory device or auxiliary memory device) via a communication network. The main memory device and the auxiliary memory device described above are examples of a non-transitory computer-readable storage medium.

Coil 50 is formed of a material having high conductivity, for example, copper. Core 62 is composed of a material having a high magnetic permeability (a ferromagnetic material, simply referred to as a magnetic body), and is preferably composed of SECC, a silicon steel plate, SUS, or the like. Plate-shaped elastic part 40 is preferably a non-magnetic material, and SUS, phosphor bronze, a resin, rubber, or the like may be applied as a non-magnetic material constituting the plate-shaped elastic part and the elastic body. In addition, base part 30 is preferably composed of a material having a high magnetic permeability, for example, SECC, a silicon steel plate, or SUS (ferromagnetic SUS). Plate-shaped weight section 70 is formed of a high specific gravity material, phosphor bronze, SUS, tungsten, or the like.

(Embodiment 2)

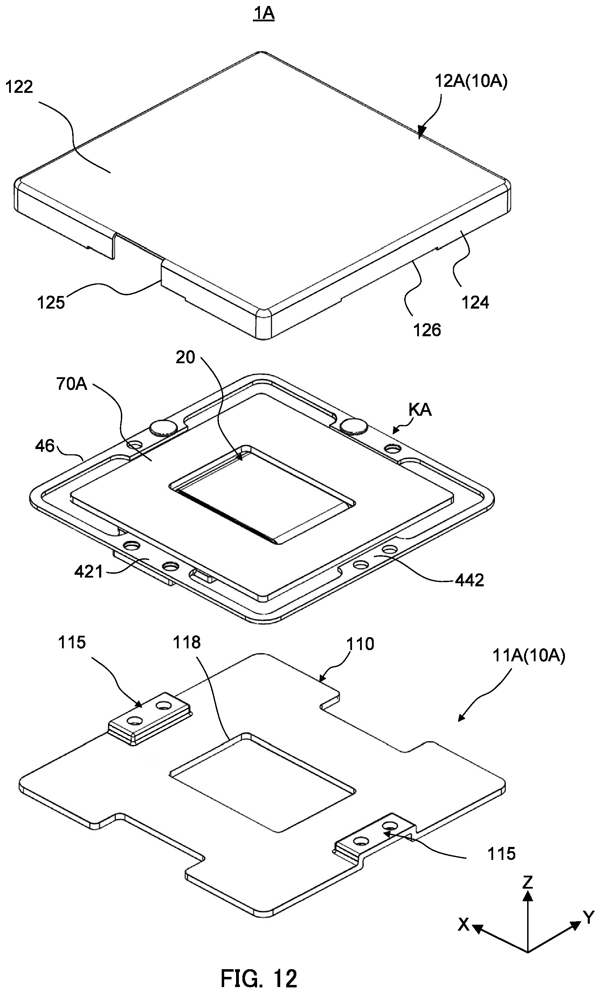

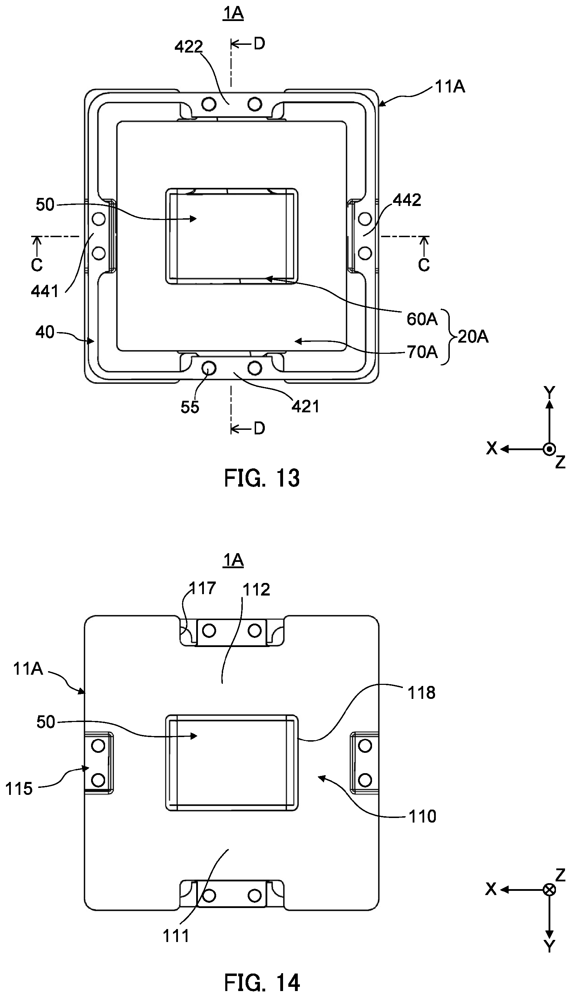

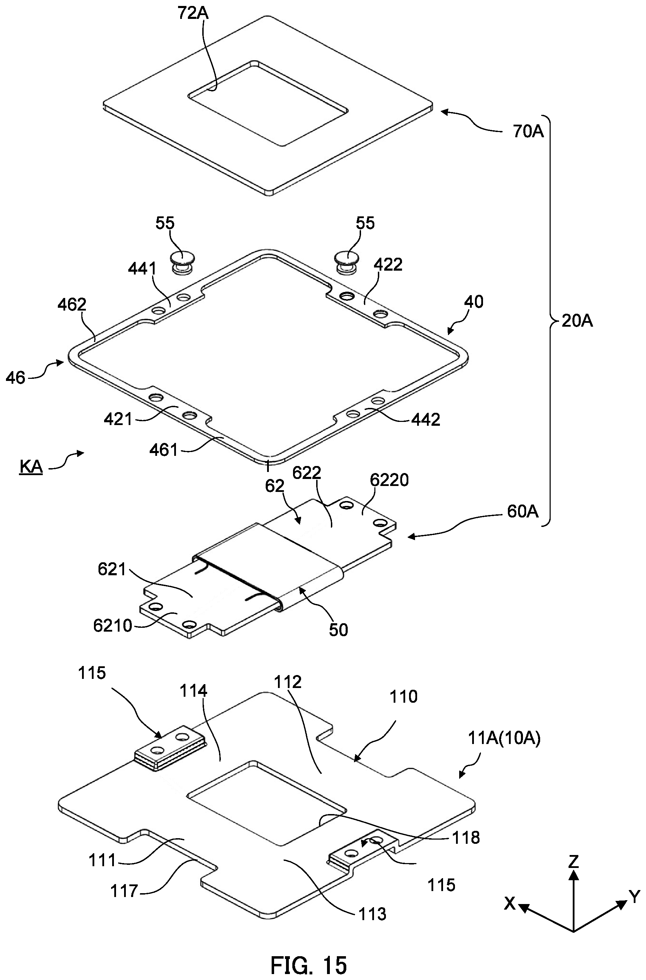

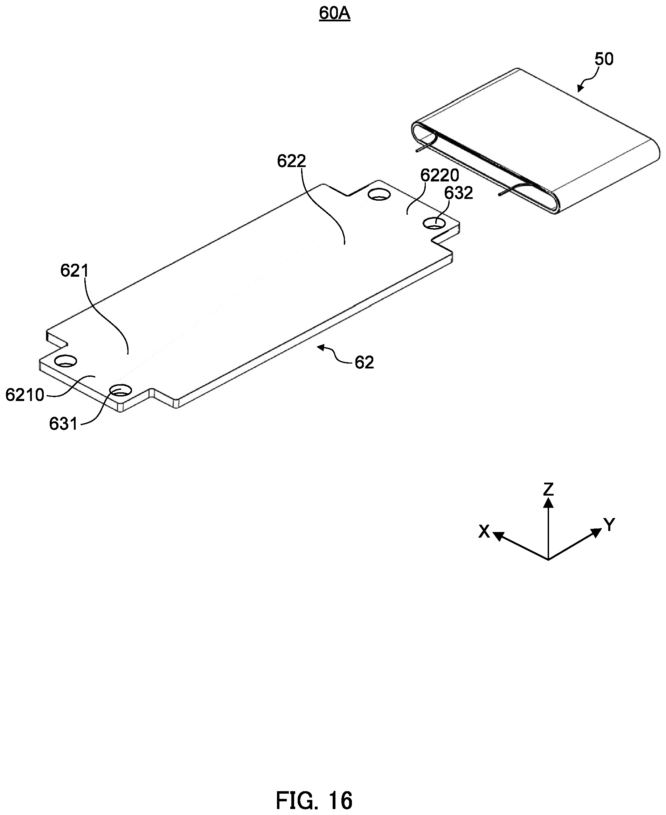

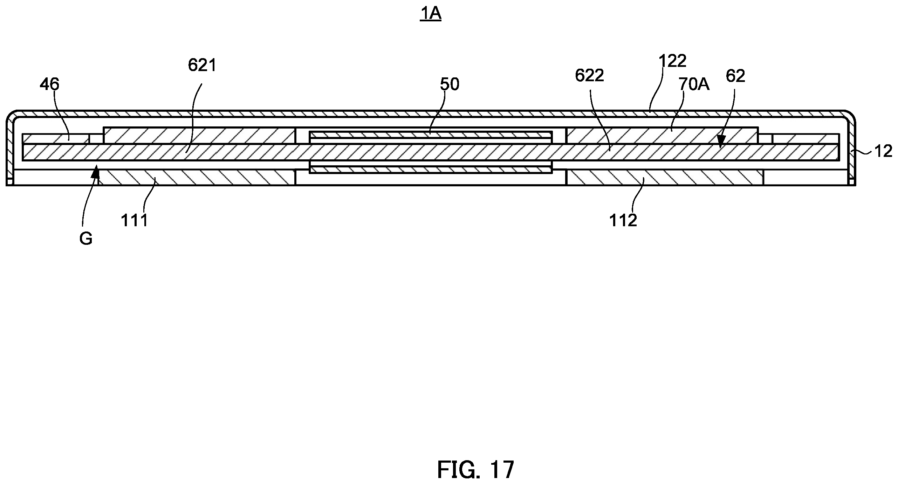

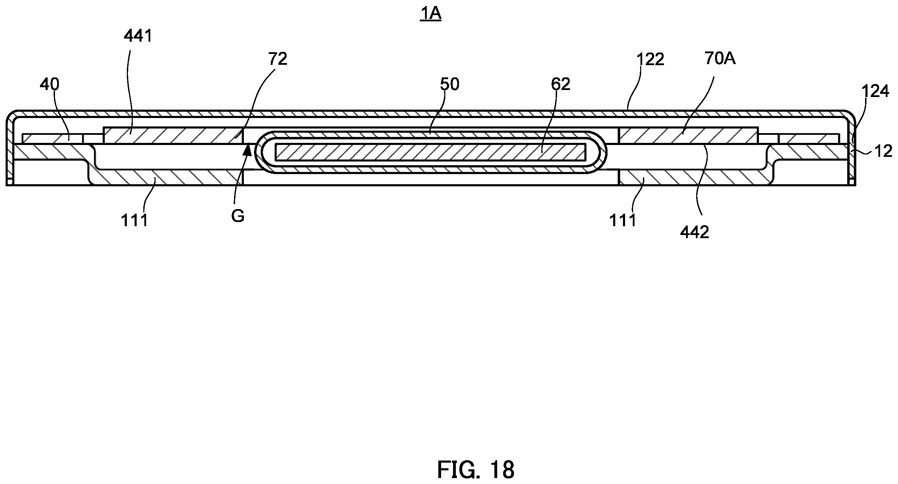

FIG. 12 is an exploded perspective view of a vibration actuator according to Embodiment 2 of the present invention with a housing cover removed, FIG. 13 is a plan view of the vibration actuator, and FIG. 14 is a bottom view of the vibration actuator. FIG. 13 is a plan view in which top surface portion 122 of housing cover 12A is shown in a state of being transparent for convenience. In addition, FIG. 15 is an exploded perspective view of the actuator body of the vibration actuator, and FIG. 16 is an exploded perspective view of a core body in the actuator body. In addition, FIG. 17 is a sectional view taken along line C-C of FIG. 13, and FIG. 18 is a sectional view taken along line D-D of FIG. 13.

Vibration actuator 1A has the same basic configuration as vibration actuator 1 corresponding to Embodiment 1 shown in FIG. 1, and the same components are designated by the same reference numerals, and the description thereof will not be repeated. In addition, components having different functions in the same configuration are designated by the same name and the same reference numeral A or a different reference numeral, and are described.

In vibration actuator 1 of Embodiment 1, the configuration in which the entire thin plate-shaped actuator body K is covered with housing 10 as the thin vibration actuator has been described. However, as in vibration actuator 1A shown in FIGS. 12 to 18, the function of actuator body KA may be used as a part of housing 10A.

Vibration actuator 1A shown in FIGS. 12 to 15 includes housing cover 12A, housing base 11A, and actuator body KA.

Housing base 11A has a function of base part 30 in actuator body KA in addition to a function of constituting housing 10A.

In vibration actuator 1A, housing cover 12A and housing base 11A constitute a flat plate-shaped hollow housing 10A. Housing cover 12A and housing base 11A accommodate actuator body KA in a movable state of movable part 20A therein.

Actuator body KA has a configuration excluding base part 30 as compared with actuator body K. As shown in FIG. 15, actuator body KA includes core body 60A that constitutes an electromagnet including core 62 and coil 50, frame-shaped plate-shaped elastic part 40, and weight part 70A.

Actuator body KA is provided to be movable in the vibration direction (thickness Z direction) via plate-shaped elastic part 40 on housing base 11A.

FIG. 16 is an exploded perspective view of a core body in the actuator body.

Core body 60A shown in FIG. 16 is a rectangular plate-shaped magnetic body, and coil 50 is disposed on an outer periphery of the central portion of core 62, and both end portions 621 and 622 that protrude from coil 50 in the axial direction of coil 50 are provided, and core 62 is excited by energizing the coil, and both end portions 621 and 622 serve as magnetic poles.

Core body 60A is connected to plate-shaped elastic part 40A on a side opposite to housing base 11A via both end pieces 6210 and 6220 of core body 60A in a state of being suspended to be positioned inside plate-shaped elastic part 40A.

Core body 60A is disposed on housing base 11A to be spaced from a surface of housing base 11A and is connected to housing base 11A to be movable via plate-shaped elastic part 40A.

Plate-shaped elastic part 40 and weight part 70A are disposed on an upper surface of core body 60A in a layered manner with respect to core body 60A.

Weight part 70A is formed in a rectangular plate shape having opening portion 72A at a central portion, and plate-shaped elastic part 40 is disposed at an outer periphery thereof.

Housing base 11A supports core body 60A and weight part 70A to be movable in the Z direction, which is the vibration direction, with respect to housing base 11A via frame-shaped plate-shaped elastic part 40. That is, housing base 11A is composed of a magnetic body as shown in FIGS. 12 to 15. Housing base 11A supports movable part 20 that is driven as an electromagnet to be movable in the approach and separation direction (Z direction in FIGS. 12 to 15, 17, and 18) with respect to housing base 11A via plate-shaped elastic part 40 of actuator body KA disposed on the front surface the housing base.

Housing base 11A includes frame-shaped base body portion 110 that is a magnetic body and has opening portion 118 at a center. Housing base 11A is a magnetic body and is preferably formed of, for example, iron (Fe), cobalt (Co), nickel (Ni), or gadolinium (Gd).

Base body portion 110 is a flat plate having a predetermined thickness in the Z direction and is formed in a square frame shape in plan view that surrounds opening portion 118 on four sides. Base body portion 110 includes planar facing portions (magnetic bodies) 111 and 112 that are magnetic bodies facing both end portions 621 and 622 of core 62. In base body portion 110, support protruding portions 115 are protruded from each of pair of side portions 113 and 114 disposed to be orthogonal to facing portions 111 and 112. Cutout portions 117 allow insertion of fastening members for bonding core body 60A facing base body portion 110 to movable-part-side fixing portions 421 and 422.

Facing portions 111 and 112 are disposed to face both end portions 621 and 622 of core 62 of actuator body KA with a gap (space) G in a facing direction intersecting the winding axis direction of coil 50. Facing portions 111 and 112 are formed at central portions of pair of side portions that sandwich opening portion 118 in the Y direction in base body portion 110. Opening portion 118 is a space into which a lower portion of coil 50 is inserted and is formed in a shape corresponding to an outer shape of moving coil 50, for example, a horizontally long rectangular shape.

Support protruding portions 115 are connected to base-part-side fixing portions 441 and 442 of plate-shaped elastic part 40 and are protruded from the surface of base body portion 110 by a length for providing a predetermined interval. The predetermined interval defines a movable range of core body 60A on a lower surface side that is suspended with respect to plate-shaped elastic part 40.

Support protruding portions 115 have the same functions as the spring connecting portions of Embodiment 1. Core body 60A is disposed to be movable in the vibration direction between support protruding portions 115.

Facing portions 111 and 112 are attracted to both end portions 621 and 622 by the magnetic attractive force generated between the back surfaces of both end portions 621 and 622 of core 62 by energizing coil 50. That is, facing portions 111 and 112 pull both end portions 621 and 622 toward the facing direction (Z direction).

Since facing portions 111 and 112 are surfaces that face the back surfaces of both end portions 621 and 622 in a full surface, magnetic flux can efficiently flow between the back surfaces of both end portions 621 and 622. Facing portions 111 and 112 are preferably formed of a metal material (for example, iron), for example, as base body portion 110.

By covering this configuration with housing cover 12A, housing 10A that accommodates actuator body KA in a movable state of movable part 20A is configured.

The functions of housing 10A and the functions as housing cover 12A such as the hard stop function with respect to movable part 20A are the same as housing 10 and housing cover 12, respectively.

As described above, in vibration actuator 1A, base body portion 110 that is a bottom portion of housing 10A is changed to the magnetic body, and core body 60A that is the coil core is disposed to face the base body portion. In addition, support protruding portions 115 ensure the amplitude of movable part 20A and the thickness of core 62. In addition, the attachment order of core body 60A and plate-shaped elastic part 40 to housing base 11A is changed such that plate-shaped elastic part 40 does not interfere with housing 10 in a case of an impact or the like.

As a result, the overall thickness can be reduced by the thickness of the base part as compared with a configuration in which the housing is simply added, and the thinning can be achieved.

(Embodiment 3)

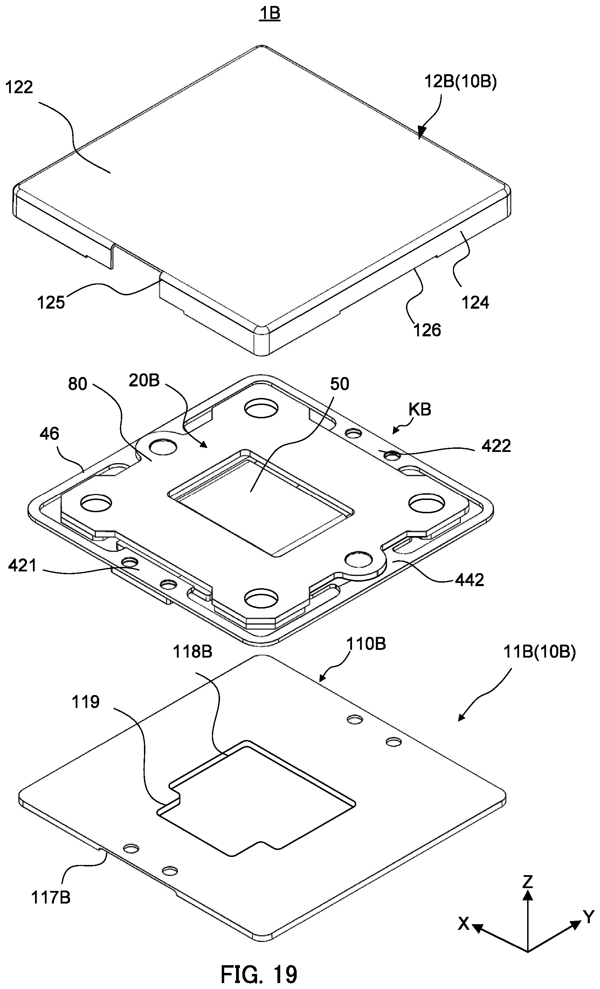

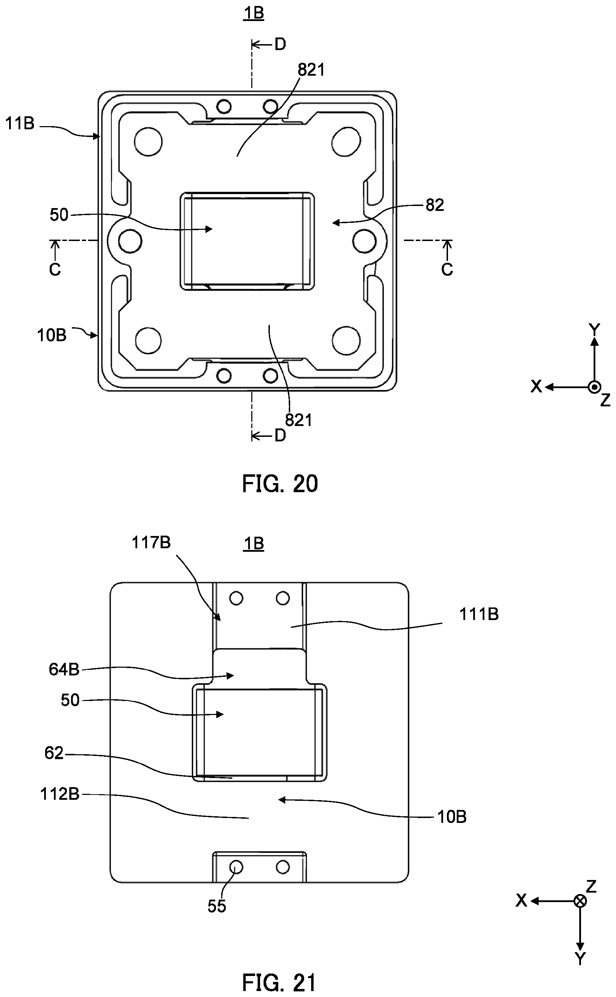

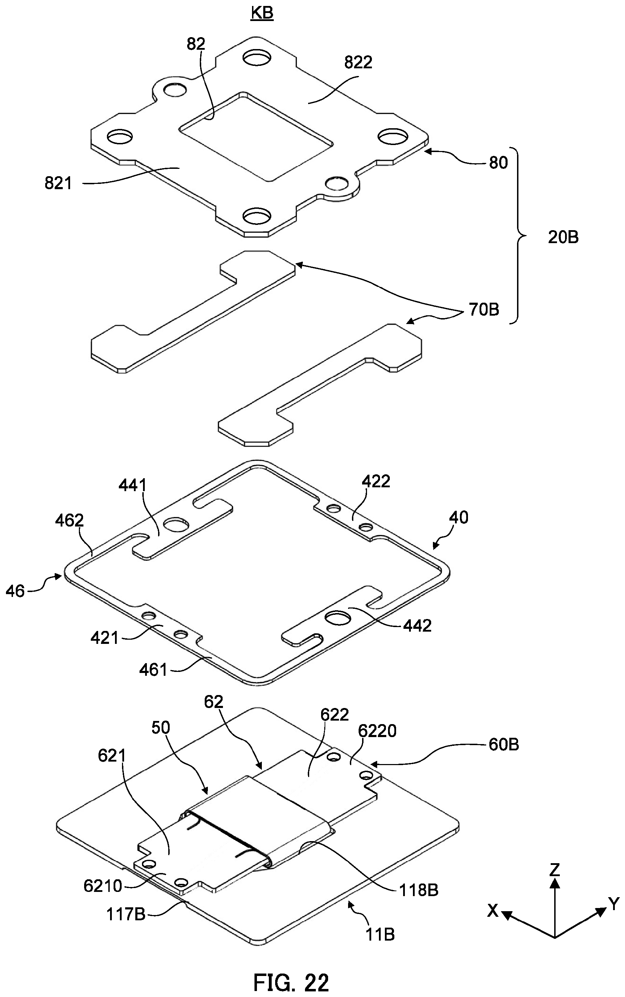

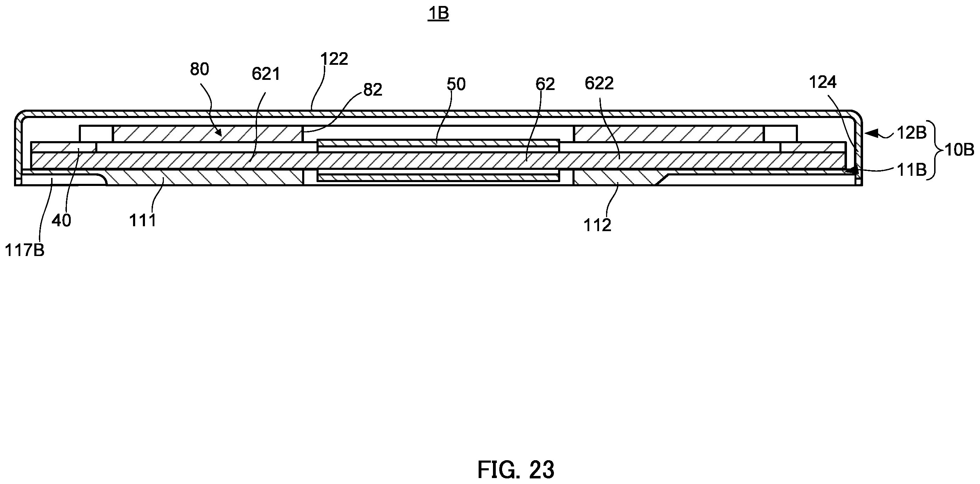

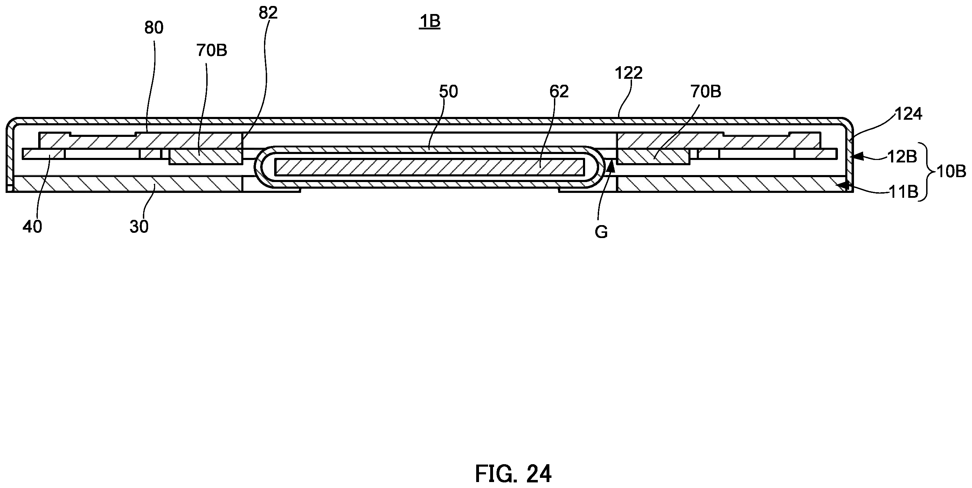

FIG. 19 is an exploded perspective view of a vibration actuator according to Embodiment 3 of the present invention with a housing cover removed, FIG. 20 is a plan view of the vibration actuator, and FIG. 21 is a bottom view of the vibration actuator. FIG. 20 is a plan view in which top surface portion 122 of housing cover 12B is shown in a state of being transparent for convenience. In addition, FIG. 22 is an exploded perspective view of the actuator body, FIG. 23 is a sectional view taken along line C-C of FIG. 20, and FIG. 24 is a sectional view taken along line D-D of FIG. 20.

Vibration actuator 1B has the same basic configuration as vibration actuator 1 corresponding to Embodiment 1 shown in FIG. 1, and the same components are designated by the same reference numerals, and the description thereof will not be repeated. In addition, components having different functions in the same configuration are designated by the same name and the same reference numeral B or a different reference numeral, and are described.

In vibration actuator 1 of Embodiment 1, the configuration in which the entire thin plate-shaped actuator body K is covered with housing 10 as the thin vibration actuator has been described. However, as in vibration actuator 1B shown in FIGS. 19 to 24, the function of actuator body KB may be used as a part of housing 10B, and core body 60B that is the coil core may be fixed and the plate-shaped magnetic body 80 may be moved.

Vibration actuator 1B includes housing cover 12B formed in a lidded tubular shape, housing base 11B, and actuator body KB.

In actuator body KB, movable part 20B is composed of weight part 70B and plate-shaped magnetic body 80, and core body 60B is fixed to housing base 11 to function as a fixing portion.

Housing base 11B closes an opening portion that is open at a lower portion of housing cover 12B accommodating actuator body KB and core body 60B is fixed to the housing base.

Housing base 11B is formed in a rectangular frame shape having coil opening portion 118B and board opening portion 119 at a central portion.

Core 62 is fixed to housing base 11B by disposing coil 50 in opening portion 118B, and disposing board 64B in board opening portion 119. For example, the back surfaces of surface-shaped both end portions 621 and 622 that protrude on both sides of coil 50 in core body 60B are fixed to housing base 11B.

As a result, housing base 11B suspends core body 60B at both end portions that sandwich coil 50. Cutout portion 117B is formed in a back surface (outer surface) of housing base 11B, and may function as a counterbore or may be used to dispose a wire connected to coil 50.

Movable-part-side fixing portions 421 and 422 provided on the pair of side portions 461 of frame-shaped plate-shaped elastic part 40 are bonded to the upper surfaces of both end pieces 6210 and 6220 of core body 60B on housing base 11B. In this case, core body 60B is disposed inside plate-shaped elastic part 40 in such a manner as to be bridged, and plate-shaped elastic part 40 is displaceable in the Z direction and the -Z direction at portions in the width direction (that is, the X direction and the -X direction) from a portion connected to core body 60B.

In plate-shaped elastic part 40, plate-shaped magnetic body 80 is attached to the upper surfaces of base-part-side fixing portions 441 and 442, and weight part 70B disposed in a layer to which elastic supporting part 40 is attached is attached to the plate-shaped magnetic body 80.

Plate-shaped magnetic body 80 is a rectangular plate-shaped frame body having opening portion 82 at a central portion, and an upper portion of coil 50 is disposed in opening portion 82. Plate-shaped magnetic body 80 faces the upper surfaces of both end portions 621 and 622 of core body 60B entirely at facing surfaces 821 and 822. By energizing coil 50, a magnetic attractive force is generated between facing surfaces 821 and 822 and both end portions 621 and 622.

Plate-shaped magnetic body 80 is disposed to face top surface portion 122 with a predetermined interval in housing 10B and is movable in the Z direction. Plate-shaped magnetic body 80 moves in the -Z direction by energizing coil 50 and moves in the Z direction by the biasing force of elastic supporting part 40. The plate-shaped magnetic body (plate having a magnetic property) used as base part 30 may be used also as plate-shaped magnetic body 80.

Weight part 70B is formed and disposed in a shape corresponding to a position that avoids core body 60B inside frame-shaped plate-shaped elastic part 40 in a region between housing base 11B and plate-shaped magnetic body 80, that is, in a layer in which plate-shaped elastic part 40 is disposed. Weight part 70B is disposed to fill a space between plate-shaped elastic part 40 and core body 60B and to be capable of vibrating.

As described above, in vibration actuator 1B of Embodiment 3, core body 60B is attached to housing base 11B as a part of housing 10B. In addition, in vibration actuator 1B, weight part 70B is disposed at a position that avoids core body 60B inside plate-shaped elastic part 40 in a region in which plate-shaped elastic part 40 is disposed together with core body 60B.

Top surface portion 122 of housing cover 12B has a hard stop function as in housing covers 12 and 12A. Top surface portion 122 of housing cover 12B restricts movable part 20B from excessively moving by abutting movable part 20B even in a case where movable part 20B is moved by an impact or the like from the outside. That is, top surface portion 122 can prevent movable part 20B from excessively moving even when movable part 20B moves to the outside of the movement range in a normal operation, and can prevent plate-shaped elastic part 40 from being deformed or the like by restricting movable part 20B such that it moves within the maximum movement range as in top surface portions 122 of housing covers 12 and 12A. As described above, in each of the embodiments, a thin flat plate-shaped vibration actuator that is strong against an impact from the outside and can be stably driven can be realized by suppressing an increase in thickness as the vibration actuator.

<Vibration Presentation Apparatus 500>

FIG. 25 is a diagram showing an example of a vibration presentation apparatus including the vibration actuator. In FIG. 25, for convenience, a surface-shaped track pad body that is subjected to a pressing operation by the operator with a finger is shown in a transparent manner. A description is given of FIG. 25 with respect to vibration actuator 1, but vibration actuators 1A and 1B may be used instead of vibration actuator 1.

Vibration presentation apparatus 500 is, for example, a track pad as a pointing apparatus used instead of a mouse in a laptop computer or the like.

The track pad as vibration presentation apparatus 500 is disposed in a rectangular opening portion provided in a housing of a laptop computer or the like. The track pad includes plate-shaped pad body 510 that is subjected to a touch operation by being traced with a finger and vibration actuator 1 disposed on a back surface of pad body 510.

When pad body 510 is subjected to a touch operation such as being traced or tapped with a finger, vibration actuator 1 applies a vibration serving as a tactile sensation. Specifically, in vibration actuator 1, coil 50 is energized in response to a touch operation of the user on pad body 510 that is an operation surface, movable part 20 vibrates by coil 50, and the tactile sensation is presented to the user. For example, pad body 510 is fastened to vibration actuator 1 on a back surface side of a central portion thereof using a double-sided tape, a screw as a fastening member, a screw, an adhesive, welding, or the like.

Housing base 11, 11A, and 11B and housing covers 12, 12A, and 12B may be bonded to each other in any manner as long as the configuration is to always cover and accommodate the plate-shaped elastic part (elastic body) in the actuator body in a movable state and in a non-movable state. As in each of the embodiments, the housing cover may be internally fitted to close the opening of the housing cover, or the opening edge of the housing cover may be butted against the housing base to be bonded. As long as the configuration in which the opening edge of the housing cover is butted against and bonded to the surface of the housing base, the housing base can be formed to have a shape larger than the cover opening, and a structure in which the housing base extends from the housing can be adopted, and the degree of freedom in design can be increased.

The embodiments of the present invention have been described above. The above description is an example of a suitable embodiment of the present invention, and the scope of the present invention is not limited thereto. That is, the configuration of the device and the shape of each part are merely an example, and it is obvious that various modifications and additions to these examples are possible within the scope of the present invention.

The disclosure of Japanese Patent Application No. 2023-170106 filed on September 29, 2023, including the specification, drawings, and abstract, is incorporated herein by reference in its entirety.

Industrial Applicability

The vibration actuator and the vibration presentation apparatus according to the present invention can be made low and have an effect of stably vibrating by preventing deformation of an elastic body, and are useful, for example, as a vibration presentation apparatus as a vibration generation body.

Reference Signs List

1, 1A, 1B Vibration actuator
2 Switching element
4 Signal generation section
10, 10A, 10B Housing
11, 11A, 11B Housing base
12, 12A, 12B Housing cover
20, 20A, 20B Movable part
30 Base part (plate-shaped magnetic body)
31 Base body portion
36 Fixing portion
38 Opening portion
40, 40A, 40B Plate-shaped elastic part (elastic supporting part)
46 Elastic body portion
47 Bonding hole
50 Coil
55 Fastening member
56 Boss portion (protruding portion)
60, 60A, 60B Core body (electromagnet)
62 Core (magnetic core)
64, 64B Board
66 Insulating film portion
68 Interconnection board
70 Plate-shaped weight section (plate-shaped weight part)
70A, 70B Weight part
72, 72A, 74 Opening portion
80 Plate-shaped magnetic body
82 Opening portion
500 Vibration presentation apparatus
110 Base body portion
111, 112 Facing portion (magnetic body)
113, 114 Side portion
115 Support protruding portion
116 Engagement edge portion
117, 117B Cutout portion
118, 118B Opening portion
119 Board opening portion
122 Top surface portion
124 Peripheral wall portion
125 Interconnection lead-out hole
126 Notch
K, KA, KB Actuator body

**Claims**

1. A vibration actuator, comprising:

   a plate-shaped magnetic body;
   a plate-shaped electromagnet disposed to face the plate-shaped magnetic body and including a core and a coil disposed on a central portion of the core;
   an elastic body that is a frame-shaped elastic body surrounding the plate-shaped magnetic body, that supports the plate-shaped electromagnet at both sides of the coil, and that is connected to the plate-shaped magnetic body; and
   a housing cover that covers the elastic body in a vibration direction and that accommodates the plate-shaped electromagnet together with the elastic body, wherein
one of the plate-shaped electromagnet or the plate-shaped magnetic body is displaced to approach the other in the housing cover to vibrate by a magnetic force generated by energizing the coil.

2. The vibration actuator according to claim 1, wherein
the housing cover has a movement restriction surface portion that is disposed outside a movement range of the one of the plate-shaped electromagnet or the plate-shaped magnetic body in a normal operation in which the one approaches the other, the movement restriction surface portion being also disposed inside a maximum movement range of the one due to an impact.

3. The vibration actuator according to claim 1, wherein:

the housing cover accommodates the plate-shaped magnetic body, the plate-shaped electromagnet, and the elastic body, and is formed in a lidded tubular shape with an opening portion in one surface; and
the housing cover has a plate-shaped housing base that closes the opening portion of the housing cover and to which the plate-shaped magnetic body is fixed.

4. The vibration actuator according to claim 1, further comprising:

a support protruding portion that protrudes from the plate-shaped magnetic body and that supports the elastic body at a predetermined interval from a surface of the plate-shaped magnetic body, wherein
the housing cover is formed in a lidded tubular shape to accommodate the elastic body and the plate-shaped electromagnet, closes an opening by being fixed to the plate-shaped magnetic body, and accommodates the plate-shaped electromagnet such that the plate-shaped electromagnet is movable in the vibration direction via the elastic body connected to the support protruding portion.

5. The vibration actuator according to claim 4, wherein:

the plate-shaped electromagnet is disposed between a plurality of the support protruding portions and is connected to a back surface of the elastic body together with the support protruding portions; and
a plate-shaped weight part that faces a top surface portion of the housing cover is provided on the plate-shaped electromagnet inside the elastic body and at a position that avoids a connection portion of the elastic body.

6. The vibration actuator according to claim 1, wherein:

the housing cover is formed in a lidded tubular shape to accommodate the elastic body and the plate-shaped electromagnet, and forms a hollow housing by being fixed to a plate-shaped bottom surface portion;
the plate-shaped electromagnet is fixed to the plate-shaped bottom surface portion;
the plate-shaped magnetic body is disposed in the housing cover to face a top surface portion of the housing cover; and
the vibration actuator further comprises a plate-shaped weight part together with the elastic body between the plate-shaped electromagnet and the plate-shaped magnetic body, the plate-shaped weight part being fixed to the plate-shaped magnetic body.

7. A vibration presentation apparatus in which the vibration actuator according to any one of claims 1 to 6 is disposed on a back surface of an operation surface, wherein
the coil is energized in response to a touch operation of a user on the operation surface, and one of the plate-shaped electromagnet or the plate-shaped magnetic body is displaced to approach the other to present vibration.

1

10

B

A

A

B

68

Z

X Y

FIG. 1

1

FIG. 2

K

68

30

64

50

47
56

62

40

60 } 20

70 }

55

Y

X ⊙ Z

FIG. 3

K

321

30

50

31

40

68

322

Z

X ⊗

Y

FIG. 4

FIG. 5

60

50

67

64

66

622    6220
632

621                                    62

6210
631                                    66

Z

X        Y

FIG. 6

FIG. 7

EP 4 786 061 A1

FIG. 8

EP 4 786 061 A1

FIG. 9

FIG. 10

FIG. 11

FIG. 12

FIG. 13

FIG. 14

FIG. 15

60A

FIG. 16

EP 4 786 061 A1

1A

FIG. 17

FIG. 18

1B

FIG. 19

1B

FIG. 20

FIG. 21

FIG. 22

1B

12B
10B
11B

124

622

62

50

82

122

621

80

112

111

40

117B

FIG. 23

FIG. 24

EP 4 786 061 A1

500

510

520

1

FIG. 25

## INTERNATIONAL SEARCH REPORT

| International application No. |
|---|
| **PCT/JP2024/033738** |

**A. CLASSIFICATION OF SUBJECT MATTER**

***B06B 1/04***(2006.01)i
FI:  B06B1/04 S

According to International Patent Classification (IPC) or to both national classification and IPC

**B. FIELDS SEARCHED**

Minimum documentation searched (classification system followed by classification symbols)

B06B1/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | US 2016/0218607 A1 (MOATECH CO., LTD.) 28 July 2016 (2016-07-28) paragraphs [0037]-[0056], fig. 1-7 | 1-2, 6-7 |
| A | | 3-5 |
| Y | JP 2017-136592 A (MINEBEAMITSUMI INC.) 10 August 2017 (2017-08-10) p. 10, paragraph [0065] | 1-2, 6-7 |
| A | | 3-5 |
| Y | JP 2023-41854 A (MINEBEAMITSUMI INC.) 24 March 2023 (2023-03-24) paragraphs [0002]-[0005] | 7 |

☐ Further documents are listed in the continuation of Box C.  ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **22 October 2024** | **05 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

| International application No. |
|---|
| **PCT/JP2024/033738** |

| Patent document cited in search report | | | Publication date (day/month/year) | Patent family member(s) | | | Publication date (day/month/year) |
|---|---|---|---|---|---|---|---|
| US | 2016/0218607 | A1 | 28 July 2016 | KR 10-2016-0090924 | A | | |
| | | | | CN 205490070 | U | | |
| JP | 2017-136592 | A | 10 August 2017 | (Family: none) | | | |
| JP | 2023-41854 | A | 24 March 2023 | US 2020/0136488 | A1 | | |
| | | | | paragraphs [0003]-[0005] | | | |
| | | | | EP 3648321 | A1 | | |
| | | | | CN 111130295 | A | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016163854 A

- JP 2023170106 A